# FASCICULE DE BREVET EUROPEEN

(11) **EP 0 520 902 B1**
(45) Date de publication et mention de la délivrance du brevet: **18.09.1996**
(21) Numéro de dépôt: 92401805.4
(22) Date de dépôt: 25.06.1992
(51) Int. Cl.: G02B 6/38, G02B 6/42

(54) **Dispositif à fibre optique transversalement anisotrope et son procédé de fabrication**
Vorrichtung mit transversal-anisotroper optischer Faser und Verfahren für ihre Herstellung
Ferrule with a transversely anisotropic optical fibre and its manufacturing method

(30) Priorité: 28.06.1991 FR 9108078
(43) Date de publication de la demande: 30.12.1992
(73) Titulaire: ALCATEL CIT, F-75008 Paris (FR)
(72) Inventeur: Grard, Emmanuel, F-91240 Saint Michel sur Orge (FR); Mousseaux, Daniel, F-91120 Palaiseau (FR); Pitel, Fabrice, F-91580 Etrechy (FR)
(74) Mandataire: Bourely, Paul

(56) Documents cités:
- EP-A- 0 215 674
- EP-A- 0 372 448
- EP-A- 0 381 513
- US-A- 4 668 264
- PATENT ABSTRACTS OF JAPAN vol. 14, no. 84 (P-1007)(4027) 16 Février 1990 & JP-A-1 296 204
- PATENT ABSTRACTS OF JAPAN vol. 10, no. 152 (P-462)(2208) 3 Juin 1986 & JP-A-61 006 610
- PATENT ABSTRACTS OF JAPAN vol. 5, no. 191 (P-092)5 Décembre 1981 & JP-A-56 114 909
- PATENT ABSTRACTS OF JAPAN vol. 11, no. 383 (P-646)15 Décembre 1987 & JP-A-62 150 208

## Description

La présente invention concerne l'utilisation de fibres optiques présentant une anisotropie dans un plan transversal. Cette anisotropie a typiquement pour but qu'une lumière injectée dans ces fibres y soit plus ou moins guidée et/ou absorbée d'une manière dépendant de la polarisation de cette lumière.

De telles fibres sont notamment des fibres-polariseurs et des fibres à maintien de polarisation. Lorsque, au cours de la fabrication d'un tel dispositif, une telle fibre est mise en place, il convient notamment de réaliser un positionnement angulaire correct de cette fibre autour de son axe longitudinal. Ce positionnement a typiquement pour but de faire coïncider un plan privilégié de la fibre, ce plan étant lié à la fibre et passant par cet axe, avec un plan de polarisation d'une lumière devant parcourir cette fibre, ce plan étant lié au dispositif à fabriquer.

Par ailleurs lorsque ce positionnement correct a été obtenu, il convient qu'il se conserve inchangé pendant la durée de service du dispositif.

Un dispositif connu prévu pour cela comporte les éléments suivants :
- une structure de support,
- des organes optiques fixés à cette structure pour fournir une lumière présentant un plan de polarisation lié à cette structure,
- une fibre optique transversalement anisotrope pour recevoir et guider cette lumière, cette fibre présentant un axe longitudinal et définissant un plan privilégié qui passe par cet axe et qui doit être en coïncidence avec ce plan de polarisation,
- une ferrule entourant et portant de manière solidaire cette fibre, une surface latérale de cette ferrule étant parallèle audit axe longitudinal, une section transversale de cette surface latérale présentant une saillie de positionnement angulairement localisée de manière que le plan privilégié de cette fibre soit défini par la position angulaire de cette saillie,
- et un récepteur de ferrule porté par ladite structure de support pour recevoir cette ferrule.

Un dispositif connu du type ci-dessus est décrit dans EP-A-0 381 513 ou dans l'article "Enhanced rotary mechanical splice for rectangular polarisation - maintaining fibers" de FREDERICK M.SEARS, CALVIN M. MILLER, W.A. VICORY, D.N. RIDGWAY présenté à la conférence OFC'89, "Conference on Optical Fiber Communication", qui s'est déroulée à Houston du 6 au 9 février 1989.

La ferrule de ce dispositif connu présente une section transversale circulaire et porte une saillie de positionnement de section rectangulaire.

L'obtention d'un positionnement angulaire précis de cette ferrule par rapport à son récepteur nécessite d'abord des usinages délicats, lors de la fabrication de la ferrule et de son récepteur, puis un grand soin lors de leur assemblage, de sorte que la précision finalement obtenue est parfois médiocre. Enfin, il est difficile de réaliser une fixation définitive de la ferrule dans son récepteur de manière à éviter tout risque de déplacement mutuel ultérieur.

La demande de brevet européen EP-A-0 215 674 décrit un dispositif à fibre optique transversalement anisotrope selon lequel la fibre est entourée d'une couche de renfort mécanique. Cette couche de renfort a une première face extérieure parallèle à l'axe principal de la région guidante elliptique et une seconde face parallèle au petit axe.

Deux fibres de ce type peuvent être alignées en les plaçant sur un subtrat commun muni d'une rainure à parois perpendiculaires. Cette disposition n'est cependant pas prévue pour faciliter une fixation mécanique résistante, par exemple par soudure, de la fibre au substrat.

L'abrégé en anglais correspondant à la demande de brevet japonais JP-A-62 150 208 décrit un autre dispositif pour coupler des fibres optiques à maintien de polarisation en faisant coincider leurs plans privilégiés : un support comporte deux gabarits munis de rainures en V entre lesquelles est placée une fibre optique. Une fois les deux gabarits collés, on obtient un corps ayant des faces à angle droit. Ce corps est ensuite coupé perpendiculairement à l'axe de la fibre. L'alignement des deux parties ainsi obtenues peut être effectué en les plaçant sur un support de même forme que les corps.

Comme précédemment, cette réalisation ne facilite par la soudure de chaque partie sur le support.

Ainsi, l'invention a pour but de remédier aux inconvénients des solutions mentionnées ci-dessus.

Dans ce but l'invention a pour objet un dispositif à fibre optique transversalement anisotrope tel que défini à la revendication 1.

La présente invention a également pour objet un procédé de fabrication d'un tel dispositif, tel que défini à la revendication 4.

A l'aide des figures schématiques ci-jointes, on va décrire plus particulièrement ci-après, à titre d'exemple non limitatif, comment la présente invention peut être mise en oeuvre. Lorsqu'un même élément est représenté sur plusieurs figures il y est désigné par un même signe de référence. Il doit être compris que les éléments mentionnés peuvent être remplacés par d'autres éléments assurant les mêmes fonctions techniques.

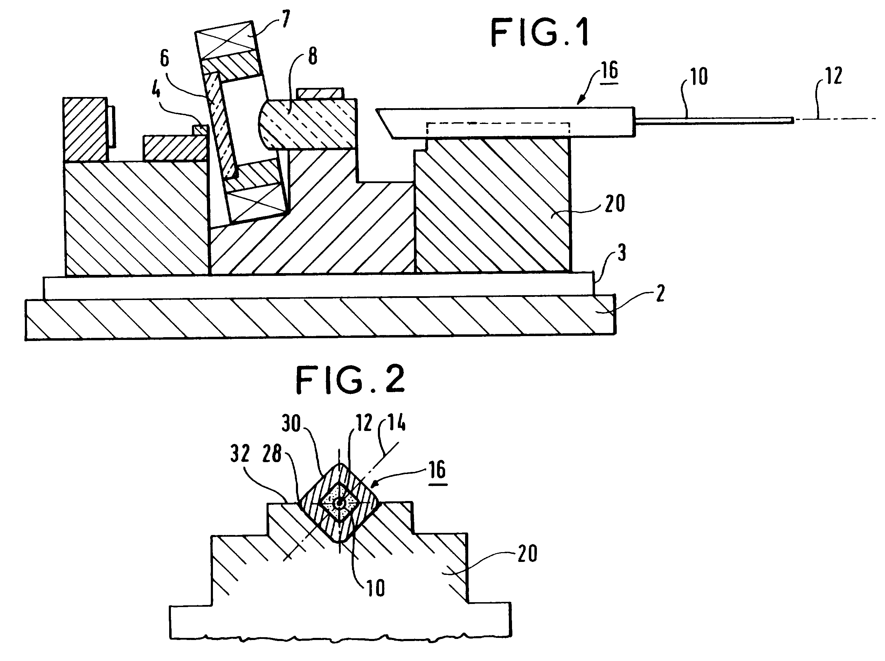

La figure 1 représente une vue en coupe longitudinale d'un dispositif selon cette invention.

La figure 2 représente une vue en coupe transversale de la ferrule de ce dispositif et du récepteur portant cette ferrule.

La figure 3 représente une vue en coupe transversale à échelle agrandie montrant cette ferrule en regard de son récepteur.

Ce dispositif est une tête laser d'émission destinée par exemple à un réseau de télécommunications à fibres optiques. Il comporte une structure de support constituée d'une semelle métallique 2, et des organes optiques fixés à cette semelle par l'intermédiaire d'éléments 3.

Ces organes optiques sont une plaquette laser semi-conductrice 4, une lame cristalline 6 entourée d'un aimant permanent 7 pour constituer un rotateur de Faraday, et une lentille de focalisation 8. La plaquette laser émet une lumière polarisée dans un plan perpendiculaire à celui de la figure et le rotateur de Faraday fait tourner le plan de polarisation de 45 degrés.

A la sortie de ces organes le plan de polarisation de la lumière est donc lié à la structure 2.

Le dispositif comporte ensuite une fibre optique transversalement anisotrope 10 recevant la lumière focalisée par la lentille 8. Cette fibre guide cette lumière. Elle présente un axe longitudinal 12 et définit un plan privilégié 14 qui passe par cet axe et qui doit être en coïncidence avec ledit plan de polarisation lié à la structure 2.

Cette fibre est plus particulièrement une fibre polariseur qui ne laisse passer que les vibrations lumineuses polarisées selon son plan privilégié.

On réalise ainsi un isolateur optique. La fonction de ce dernier est d'empêcher qu'une lumière parasite renvoyée vers la tête laser d'émission par l'intermédiaire de la fibre 10 puisse atteindre la plaquette laser 4 avec un plan de polarisation parallèle à celui de la lumière émise par cette plaquette. Cette fonction est utile parce qu'une telle lumière ayant ce plan de polarisation perturberait le fonctionnement de la plaquette laser.

La fibre polariseur 10 se raccorde à une fibre optique normale, c'est-à-dire transversalement isotrope, à distance de la tête laser d'émission.

Un tel dispositif a déjà fait l'objet de la demande de brevet européen EP-A-0 372 448.

La fibre polariseur 10 se raccorde à une fibre optique normale, c'est-à-dire transversalement isotrope, à distance de la tête laser d'émission.

Pour fixer la fibre 10 le dispositif comporte une ferrule 16 entourant et portant cette fibre de manière solidaire. La surface latérale de cette ferrule est parallèle à l'axe longitudinal 12 et présente des faces de portée 17, 19. Une section transversale de cette surface latérale présente une saillie de positionnement 18.

Un récepteur de ferrule 20 est porté par la structure de support 2 pour recevoir cette ferrule 16. Il présente des faces de réception 22, 24 pour recevoir les faces de portée 17,19 de cette ferrule et un creux de positionnement 26 pour recevoir la saillie de positionnement 18.

Les deux faces de portée 17, 19 sont planes et forment sensiblement un dièdre saillant, et le récepteur de ferrule 20 présente deux faces de réception planes 22, 24 formant sensiblement un dièdre rentrant complémentaire de ce dièdre saillant 18, 19. Cette disposition simple assure un appui simultané de ces deux faces de portée 17,19 contre ces deux faces de réception 22,24, respectivement, et ces dièdres saillant et rentrant constituent aussi lesdites saillies de positionnement 18 et creux de positionnement 26, respectivement.

On va maintenant indiquer des dispositions complémentaires qui sont adoptées dans le dispositif selon l'invention.

Chaque face de portée telle que 17 reste en contact de la face de réception complémentaire 22 jusqu'à une ligne longitudinale de rencontre 28 entre la ferrule 16 et son récepteur 20. Une face latérale 30 de la ferrule s'écarte alors d'une face libre 32 du récepteur de ferrule en formant sensiblement un dièdre rentrant 30, 32 qui définit un angle dièdre supérieur à 90 degrés. Cet angle dièdre peut être dit "d'accessibilité" en ce sens que plus il est grand, plus cela facilite l'accès d'un faisceau énergétique de soudure jusqu'à cette ligne de rencontre 28. Pour permettre de réaliser une fixation de la ferrule à son récepteur à l'aide d'un tel faisceau, les matériaux de cette ferrule et de ce récepteur sont choisis soudables.

Plus particulièrement le matériau choisi pour la ferrule et son récepteur est un métal dur à faible coefficient de dilatation thermique et l'angle dièdre d'accessibilité vaut environ 135 degrés.

Les opérations de réalisation du dispositif sont alors les suivantes :
- fabrication de la structure de support 2 portant les organes optiques 4, 6, 8 et le récepteur de ferrule 20 avec ses faces de réception 22,24,
- fabrication de la ferrule 16 selon les indications précédentes,
- positionnement et fixation de la fibre transversalement anisotrope 10 dans cette ferrule 16,
- mise en appui des faces de portée 17, 19 de cette ferrule contre les faces de réception 22, 24 de ce récepteur,
- et soudure de cette ferrule à ce récepteur le long de leurs lignes longitudinales de rencontre 28 qui coincident avec les sommets 36 des dièdres 30, 32.

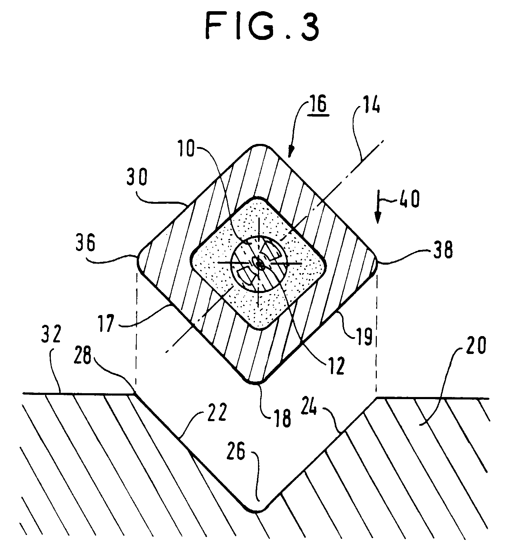

Plus particulièrement la fixation de la ferrule 16 à son récepteur 20 est réalisée par des points de soudure successifs, par exemple deux points sur chacune des deux lignes de rencontre telles que 28. Ces points de soudure sont réalisés à l'aide d'un laser YAG dont le faisceau 40, illustré par une flèche à la figure 3, conserve une direction inchangée qui est commune aux deux angles dièdres d'accessibilité partant des deux lignes de rencontre telles que 28.

De préférence la section transversale de la ferrule 16 est sensiblement un quadrilatère dont deux côtés adjacents définissent les deux faces de portée 17, 19, deux sommets opposés de ce quadrilatère 36, 38 définissant les deux lignes longitudinales de rencontre 28, les deux dites faces libres 32 du récepteur de ferrule s'étendant dans un même plan passant par ces deux lignes. Plus particulièrement, comme représenté, la forme carrée est choisie parce qu'elle est simple à réaliser et à manipuler.

Avantageusement, en particulier dans le cas d'une ferrule à section transversale de forme carrée, un moyen de repérage des deux surfaces de portée est prévu ; ce moyen peut être par exemple un trait ou un point tracé au niveau de l'arête du dièdre que forment sensiblement ces deux surfaces.

On réalise de manière connue le positionnement et la fixation de la fibre 10 dans la ferrule 16, et le positionnement et la fixation sur le support 2 du récepteur de ferrule 20 auquel la ferrule équipée de la fibre a préalablement été fixée.

## Revendications

1. Dispositif à fibre optique transversalement anisotrope comportant :
- une structure de support (2),
- des organes optiques (4, 6, 8) fixés à cette structure pour fournir une lumière présentant un plan de polarisation dont la position angulaire est liée à cette structure,
- une fibre optique transversalement anisotrope (10) pour recevoir et guider cette lumière, cette fibre présentant un axe longitudinal (12), ainsi qu'un plan privilégié (14) passant par cet axe qui est destiné à être mis en coïncidence avec ledit plan de polarisation lié à la structure (2),
- une ferrule (16) entourant et portant de manière solidaire ladite fibre (10), la surface latérale externe de cette ferrule étant parallèle audit axe longitudinal (12) et présentant deux faces de portée planes (17,19) formant sensiblement un diédre saillant, le sommet (18) dudit dièdre saillant constituant une saillie de positionnement angulairement localisée de manière à servir de référence au positionnement angulaire du plan privilégié de cette fibre dans ladite ferrule,
- et un récepteur de ferrule (20) porté par ladite structure de support (2) pour recevoir cette ferrule (16), le récepteur de ferrule (20) présentant deux faces de réception planes (22, 24) formant sensiblement un dièdre rentrant complémentaire de ce dièdre saillant (17, 19) de manière à assurer un appui simultané de ces deux faces de portée (17,19) contre ces deux faces de réception (22,24), respectivement, le positionnement angulaire de la fibre dans ladite ferrule étant tel que son plan privilégié coincide avec ledit plan de polarisation lié à la structure lorsque ladite ferrule est reçue dans ledit récepteur, ledit dispositif étant caractérisé en ce que ledit diédre rentrant (22, 26, 24) est formé dans une surface externe (32) dudit récepteur de ferrule (20), en ce que ledit dièdre saillant (17,18, 19) est dimensionné par rapport audit dièdre rentrant (22, 26, 24) de sorte que les deux faces de portée (17, 19) du dièdre saillant aient des largeurs identiques à celles desdites faces de réception (22, 24) afin que chacun des bords longitudinaux (36) desdites faces de portée (17, 19) opposé au sommet (18) dudit dièdre saillant affleure ladite surface externe libre (32) du récepteur, et en ce que les surfaces latérales libres (30) de la ferrule adjacentes à l'une et l'autre desdites faces de portée (17,19) s'écartent de ces dernières de façon à former avec ladite surface externe libre (32) dudit récepteur sensiblement un dièdre rentrant (30, 32) dit d'accessibilité présentant un angle supérieur à 90 degrés, de manière à faciliter la soudure de la ferrule (16) au récepteur (20).

2. Dispositif selon la revendication 1, caractérisé par le fait que la section transversale de la ferrule (16) est un quadrilatère dont deux côtés adjacents définissent lesdites faces de portée (17, 19), deux sommets opposés de ce quadrilatère (36, 38) définissant sensiblement lesdits bords longitudinaux (36).

3. Dispositif selon la revendication 2, caractérisé par le fait que la section transversale de la ferrule (16) est un carré.

4. Procédé de réalisation d'un dispositif selon l'une des revendications 1 à 3, ce procédé comportant les opérations suivantes :
- fabrication de la structure de support (2) portant lesdits organes optiques (4, 6, 8) et ledit récepteur de ferrule (20) tel que défini à la revendication 1,
- fabrication d'une ferrule (16) telle que définie dans la revendication 1,
- positionnement et fixation angulaires de ladite fibre transversalement anisotrope (10) dans cette ferrule (16) de façon telle que son plan privilégié (14) puisse coincider avec ledit plan de polarisation lié à la structure lorsque ladite ferrule est reçue dans ledit recepteur,
- mise en appui desdites faces de portée (17, 19) de cette ferrule contre lesdites faces de réception (22, 24) de ce récepteur,
- et soudure de cette ferrule à ce récepteur le long des sommets (36) desdits dièdres (30, 32) d'accessibilité supérieure à 90° degrés.

5. Procédé selon la revendication 4, caractérisé par le fait que ladite soudure est réalisée par points à l'aide d'un faisceau laser (40) dont la direction est la même pour chacun des sommets (36) desdits dièdres (30, 32) d'accessibilité supérieure à 90° degrés.

## Patentansprüche

1. Vorrichtung mit einer in Querrichtung anisotropen Lichtleitfaser, wobei die Vorrichtung aufweist:
- eine Sockelstruktur (2),
- optische Organe (4, 6, 8), die an dieser Struktur befestigt sind, um ein Licht mit einer Polarisationsebene zu liefern, deren Winkellage mit dieser Struktur verknüpft ist,
- eine in Querrichtung anisotrope Lichtleitfaser (10), die dieses Licht empfangen und führen soll und eine Längsachse (12) sowie eine bevorzugte Ebene (14) besitzt, die durch diese Achse verläuft und mit der mit der Struktur (2) verknüpften Polarisationsebene in Koinzidenz gebracht werden soll,
- ein die Faser (10) fest umgebendes und tragendes Endstück (16), dessen äußere Seitenfläche parallel zur Längsachse (12) verläuft, indem zwei ebene Tragflächen (17, 19) im wesentlichen einen konvexen Zweiflächler bilden, dessen Scheitel (18) einen Vorsprung zur winkelmäßig lokalisierten Positionierung bildet und als winkelmäßiger Positionierungsbezug der bevorzugten Ebene der Faser im Endstück dient,
- und ein Aufnahmeorgan (20) für das Endstück, das auf der Sockelstruktur (2) sitzt und dieses Aufnahmeorgan (16) aufnimmt, indem es zwei ebene Aufnahmeflächen (22, 24) bildet, die im wesentlichen einen zum konvexen Zweiflächler (17, 19) komplementären konkaven Zweiflächler darstellen und ein gleichzeitiges Aufliegen dieser beiden Tragflächen (17, 19) auf den beiden Aufnahmeflächen (22, 24) gewährleisten, wobei die winkelmäßige Positionierung der Faser in dem Endstück so erfolgt, daß die bevorzugte Ebene mit der mit der Struktur verknüpften Polarisationsebene koinzidiert, wenn das Endstück in dem Aufnahmeorgan liegt, dadurch gekennzeichnet, daß der konkave Zweiflächler (22, 26, 24) in einer äußeren Oberfläche (32) des Empfangsorgans (20) ausgebildet ist, daß der konvexe Zweiflächler (17, 18, 19) so hinsichtlich des konkaven Zweiflächlers (22, 26, 24) dimensioniert ist, daß die beiden Tragflächen (17, 19) des konvexen Zweiflächlers die gleiche Breite wie die Aufnahmeflächen (22, 24) besitzen, so daß jeder der vom Scheitel (18) des konvexen Zweiflächlers entfernt liegenden Längsränder (36) der Tragflächen (17, 19) an der freien äußeren Oberfläche (32) des Empfangsorgans liegt, und daß die freien seitlichen Oberflächen (30) des Endstücks, die an die beiden Tragflächen (17, 19) anschließen, sich von diesen letzteren so entfernen, daß sie mit der äußeren freien Oberfläche (32) des Aufnahmeorgans im wesentlichen einen konkaven Zweiflächler (30, 32) bilden, der Zugänglichkeits-Zweiflächler genannt wird und einen Scheitelwinkel größer als 90° besitzt, um ein Anschweißen des Endstücks (16) am Aufnahmeorgan (20) zu erleichtern.

2. Vorrichtung nach Anspruch 1, dadurch gekennzeichnet, daß der Querschnitt des Endstücks (16) vierseitig ist, wobei zwei benachbarte Seiten die Tragflächen (19) und zwei einander gegenüberliegende Ecken (36, 38) dieses Querschnitts die Längsränder (36) bilden.

3. Vorrichtung nach Anspruch 2, dadurch gekennzeichnet, daß der Querschnitt des Endstücks (16) ein Quadrat ist.

4. Verfahren zur Herstellung einer Vorrichtung nach einem der Ansprüche 1 bis 3, das folgende Verfahrensschritte aufweist:
- Herstellung der Sockelstruktur (2), die die optischen Organe (4, 6, 8) und das Aufnahmeorgan (20) für das Endstück gemäß der Definition in Anspruch 1 trägt,
- Herstellung eines Endstücks (16) gemäß der Definition in Anspruch 1,
- Positionierung und winkelmäßige Festlegung der in Querrichtung anisotropen Faser (10) in diesem Endstück (16), derart, daß ihre bevorzugte Ebene (14) mit der mit der Struktur verknüpften Polarisationsebene koinzidieren kann, wenn das Endstück sich im Aufnahmeorgan befindet,
- Auflegen der Tragflächen (17, 19) des Endstücks auf die Aufnahmeflächen (22, 24) des Aufnahmeorgans,
- und Anschweißen des Endstücks am Aufnahmeorgan entlang der Scheitel (36) der Zugänglichkeits-Zweiflächler (30, 32) mit einem Winkel größer als 90°.

5. Verfahren nach Anspruch 4, dadurch gekennzeichnet, daß das Verschweißen punktförmig mit Hilfe eines Laserstrahls (40) erfolgt, dessen Richtung für jeden der Scheitel (36) der Zugänglichkeits-Zweiflächler (30, 32) mit einem Winkel größer als 90° die gleiche ist.

## Claims

1. A device including a transversely anisotropic optical fiber, comprising:
a support structure (2);
optical components (4, 6, 8) fixed to said structure for providing a light having a plane of polarization whose angular position is defined relative to said structure;
a transversely anisotropic optical fiber (10) for receiving and guiding said light, said fiber having a longitudinal axis (12), and a privileged plane (14) including said axis which is designed to be caused to coincide with said plane of polarization and defined relative to the structure (2);
a ferrule (16) securely carrying and surrounding said fiber (10), the outside surface of said ferrule being parallel to said longitudinal axis (12) and having two plane bearing faces (17, 19) forming a projecting substantially dihedral-angled portion, the vertex (18) of said projecting dihedral-angled portion constituting a positioning projection which is angularly located so as to serve as reference for angularly positioning the privileged plane of said fiber in said ferrule in defined manner; and
a ferrule receiver (20) carried by said support structure (2) for receiving said ferrule (16), the ferrule receiver (20) presenting two plane reception faces (22, 24) forming a re-entrant substantially dihedral-angled portion complementary to said projecting dihedral-angled portion (17, 19), thereby ensuring that said two bearing faces (17, 19) can be pressed simultaneously against respective ones of said reception faces (22, 24), the angular positioning of the fiber inside said ferrule being such that its privileged plane coincides with said plane of polarization defined relative to the structure when said ferrule is received in said receiver, said device being characterized in that said re-entrant dihedral-angled portion (22, 26, 24) is formed in an outside surface (32) of said ferrule receiver (20), in that said projecting dihedral-angled portion (17, 18, 19) is dimensioned relative to said re-entrant dihedral-angled portion (22, 26, 24) such that the two bearing faces (17, 19) of the projecting dihedral-angled portion are of widths identical to those of said receiving faces (22, 24) so that each of the longitudinal edges (36) of said bearing faces (17, 19) opposite the vertex (18) of said projecting dihedral-angled portion are flush with said disengaged outside surface (32) of the receiver, and in that the disengaged outside surfaces (30) of the ferrule adjacent to both of said bearing faces (17, 19) move away therefrom in order to co-operate with said disengaged outside surface (32) of said receiver to form a re-entrant substantially dihedral-angled portion (30, 32) referred to as an angle "of accessibility" of more than 90°, thereby facilitating bonding the ferrule (16) to the receiver (20).

2. A device according to claim 1, characterized by the fact that the cross-section of the ferrule (16) is a quadrilateral having two adjacent sides defining said bearing faces (17, 19), two opposite vertices of said quadrilateral (36, 38) defining substantially said longitudinal edges (36).

3. A device according to claim 2, characterized by the fact that the cross-section of the ferrule (16) is a square.

4. A method of making a device according to any one of claims 1 to 3, the method comprising the following operations:
making the support structure (2) carrying said optical components (4, 6, 8) and said ferrule receiver (20) such as defined in claim 1;
making a ferrule (16) as defined in claim 1;
angularly positioning and fixing said transversely anisotropic fiber (10) inside said ferrule (16) such that its privileged plane (14) can coincide with said plane of polarization defined relative to the structure when said ferrule is received in said receiver;
causing said bearing faces (17, 19) of said ferrule to bear against said reception faces (22, 24) of said receiver; and
bonding said ferrule to said receiver along the vertices (36) of said dihedral-angled portion (30, 32) of accessibility of more than 90°.

5. A method according to claim 4, characterized by the fact that said bonding is performed by spot welding using a laser beam (40) propagating in the same direction for each of the vertices (36) of said dihedral-angled portion (30, 32) of accessibility of more than 90°.
